# EUROPEAN PATENT SPECIFICATION

(11) **EP 1 845 771 B1**
(45) Date of publication and mention of the grant of the patent: **10.08.2016**
(21) Application number: 05706452.9
(22) Date of filing: 04.02.2005
(51) Int. Cl.: A01K 5/01, A01K 5/00

(54) **ANIMAL FEEDER WITH ADJUSTMENT OF A FEED DISCHARGE OPENING**
TIERFÜTTERUNGSVORRICHTUNG MIT EINSTELLUNG EINER FUTTERAUSTRAGSÖFFNUNG
DISPOSITIF D'ALIMENTATION POUR ANIMAUX AVEC RÉGLAGE D'OUVERTURE DE DÉCHARGE D'ALIMENTATION

(43) Date of publication of application: 24.10.2007
(73) Proprietor: CRYSTAL SPRING COLONY FARMS LTD., Sainte Agathe, Manitoba, R0G 1Y0 (CA)
(72) Inventor: KLEINSASSER, Jonathan, Manitoba R0G 1Y0 (CA)
(74) Representative: Jostarndt Patentanwalts-AG
(86) International application number: PCT/CA2005/000128
(87) International publication number: WO 2006/081646

(56) References cited:
- EP-A- 1 203 528
- WO-A-96/22680
- US-A- 4 315 484
- US-A- 4 444 151
- US-A- 5 010 849
- US-A- 5 640 926
- US-A- 5 967 083
- US-A1- 2002 124 805

## Description

This invention relates to an animal feeder with an adjustable feed discharge opening thus adjusting the amount of feed which is allowed to pass through the opening.

### BACKGROUND OF THE INVENTION

Various arrangements of animal feeder are provided in which there is a trough into which feed can be deposited from a hopper above the trough. In most cases the feed material to be deposited can vary in particle size and viscosity so that it is often desirable to provide an arrangement which allows an adjustment of the opening through which the material can feed from the hopper into the trough.

In many cases the opening is provided by a simple shutter at the gap between the Hopper and the trough where the height of the shutter can be adjusted to vary the gap at the bottom of the shutter.

In US patent 4,660,508 (Kleinsasser) issued April 28th, 1987 is disclosed a feeder which provides a shelf above the trough with the hopper discharging onto the shelf in a manner so that the feed remains on the shelf but can be moved from the shelf to the trough by the animal as required. Feeders of this type have achieved significant commercial success. Adjustment of the height of the shelf is necessary for the purpose of accommodating different types of feed and different feed rates and this is obtained by a hand crank screw which operates with a threaded nut to raise and lower a strap carrying the shelf. The screw is used in adjustment of this device because the deposit of the feed onto the self requires an accurate adjustment of the distance between the shelf and the bottom edge of the hopper so that cruder systems with a less fine adjustment have been rejected.

WO 96/22680 issued as US patent 5,603,285 also of Kleinsasser issued February 18th, 1997 discloses a similar animal feeder comprising a hopper 25, a trough 13, a shelf 62 mounted so as to define an opening relative to the bottom edge of the hopper. Herebey, the additional adjustment of the height of the shelf is possible by means of a manually driven adjustment linkage but again fine adjustment is provided by a screw.

In a number of US patents it is known to provide relatively crude adjustment techniques. For example the following patents provide adjustment devices; US patent 1,719,245 (Smidley) issued July 2nd, 1929, US patent 3,552,360 (Nelson) issued January 5th, 1971, US patent 4,242,985 (Freeborn) issued January 6th, 1981, US patent 4,278,049 (Van Dusseldorp) issued July 14th, 1981, US patent 4,351,274 (Pannier) issued September 28th, 1982, US patent 4,462,338 (Thibault) issued July 31st, 1984, US patent 6,408,787 (Clark) issued June 25th, 2002.

It is also known to provide arrangements in which adjustment in a relatively crude manner is effected by selecting one of a plurality of holes in which to locate the pin of an adjustment lever so that the adjustment is effected step by step. As the holes must be necessarily a certain distance apart, such an adjustment provides a relatively crude distance of adjustment so that the fine tuning necessary for determining the specific dimensions of an opening to accurately control the rate of flow of feed material is not possible in such a system. One example is shown in Published Application US2002/0124805 which is now_US patent 6,637,368 (Bondarenko) issued October 28th, 2003 discloses an animal feeder comprising a hopper 45, a receptacle 55, an opening trough, the amount of feed discharged from the hopper to the receptacle being controlled by a width of the opening, an adjustment linkage 20 comprising a manually adjustable lever 16 mounted for pivotal movement about a pivot axis, a link 15 attached to the lever and to an element 14 such that pivotal movement of the lever causes longitudinal movement of the link. This provides a link which extends along one end wall of a feeder and a lever can be moved to place a pin into a selected one of a number of holes in the end wall. Hence, this document discloses an arrangement as set out in the preamble to claim 1 herein.

### SUMMARY OF THE INVENTION

It is one object of the invention to provide an improved feeder which allows fine adjustment of the opening to allow a measured amount of feed while allowing quick return of the opening to a set position.

According to one aspect of the invention there is provided an animal feeder comprising a hopper (11) for containing a feed material to be dispensed to an animal for feeding therefrom;
a receptacle (16) for receiving the feed from the hopper from which the animal can take the feed;
an opening through which the feed passes so that the amount of feed discharged from the hopper to the receptacle is controlled by a width of the opening;
and an adjustment linkage for operating adjustment movement of the opening, the linkage including:
a manually adjustable lever (21) mounted for pivotal movement about a pivot axis (23);
a link (20) attached to the lever (21) and to an element (16) of the opening such that pivotal movement of the lever (21) causes longitudinal movement of the link (20) to effect adjustment of the opening;
a plate (22) defining a surface over which the lever (21) moves, the surface defining an arcuate portion (29) lying on an arc of a circle surrounding the pivot axis (23) of the lever;
characterized in that the arcuate portion (29) of the surface is serrated to define an arcuate row of saw teeth (55); the lever has a lever edge which is also serrated with a row of saw teeth (55) shaped to mesh with the saw teeth (39) of the arcuate portion (29) and the lever (21) is movable from a meshing position to a non-meshing position in which the lever (21)is free to move around the pivot axis (23) to move the lever (21) and the teeth (55) thereof along the arcuate row of saw teeth (39) to adjust the position of the link (20).

Preferably the plate lies in a radial plane of the pivot axis and the arcuate row of teeth are located on an edge of the plate.

Preferably the edge of the plate is an outer edge facing radially outwardly of the axis.

Preferably the lever is formed by a flat of sheet material which lies in a plane parallel to and slides over the plate and wherein the lever includes a portion thereof which is bent out of a plane of the lever into the plane of the plate and carries the row of saw teeth of the lever on an edge thereof.

Preferably the lever is movable in a direction axial of the pivot axis to move the row of teeth thereof axially away from the plate.

Preferably the row of teeth on the lever face radially inwardly toward the pivot axis.

Preferably the lever has a hole therein exposing a portion of the plate and markings thereon adjacent the row of saw teeth thereon.

Preferably the lever is pivotally mounted on the plate.

Preferably the link is connected to the lever by a pin which is slidable in a slot in the plate.

Preferably the pin carries a spring which biases the lever into engagement with the plate into said meshing position and which is compressible to allow movement of the lever to the non-meshing position.

Preferably the plate is mounted on an end wall of the hopper parallel to and spaced from the end wall.

Preferably the link comprises a strap located between the plate and the end wall.

In one preferred arrangement there is provided a trough into which the feed can fall and wherein the receptacle comprises a shelf mounted above the trough arranged so that the animal can take feed from the shelf or can move the feed from the shelf to the trough. This construction is well known as a "wet/dry" feeder where the shelf holds the feed in dry condition above the trough but can be added to water in the trough for a wet condition. In this arrangement, the link is connected to the shelf for adjustment of the height thereof relative to a bottom edge of the hopper defining the opening therebetween.

However the same construction can be used with a conventional dry feeder where the adjustment is effected by moving a plate which extends generally upright from a base wall of the trough so that a bottom edge of the plate cooperates with the base wall in defining the opening. Typical dry feeders are commonly, but not necessarily, double sided so that the same hopper feeds two sides of a trough with each side having its own adjustment plate. In this case there my be two such adjustment devices as defined above at each end of the hopper so that each plate is independently adjusted by a pair of adjustment devices one at each end wall of the hopper. Alternatively the two plates may be adjusted commonly by a single pair of adjustment devices depending upon the requirements of the customer.

### BRIEF DESCRIPTION OF THE DRAWINGS

One embodiment of the invention will now be described in conjunction with the accompanying drawings in which:

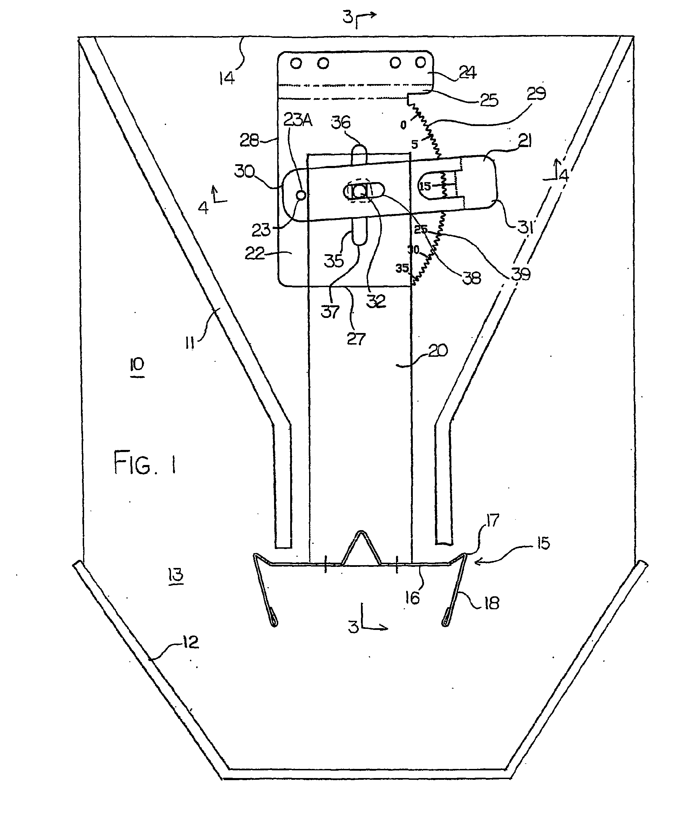

Figure 1 is a cross sectional view through a feeder according to the present invention.
Figure 2 is a view on an enlarged scale of the adjustment mechanism of Figure 1.
Figure 3 is a cross sectional view along the lines 3-3 of Figure 1.

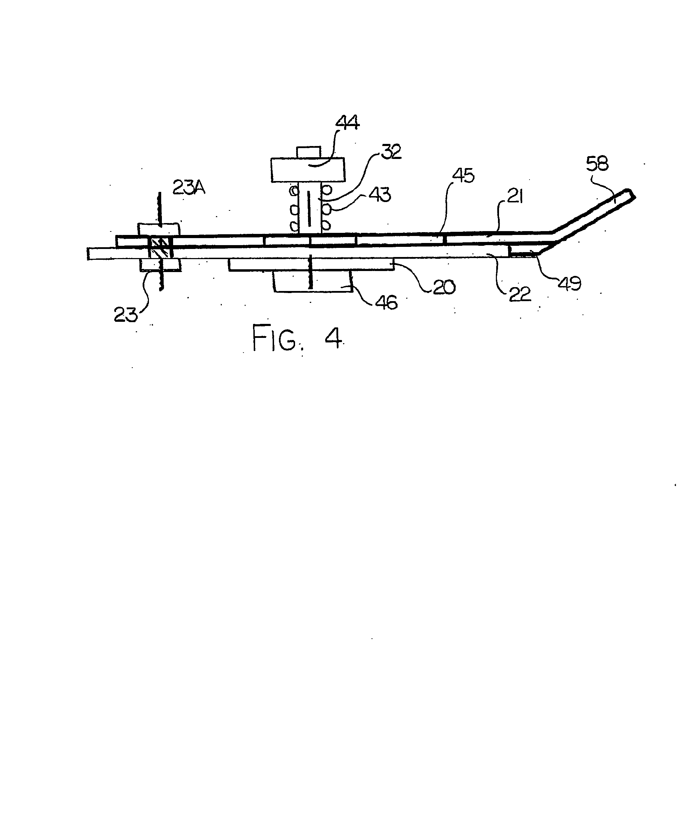

Figure 4 is a cross sectional view along the lines 4-4 of Figure 1.

In the drawings like characters of reference indicate corresponding parts in the different figures.

### DETAILED DESCRIPTION

A feeder is generally indicated at 10 and includes a hopper 11 and a trough 12. The trough is connect to the hopper by end walls 13 so as to form an integral structure with generally open top 14 through which feed can be inserted for containing in the hopper and for discharge into the trough 12 for feeding by one or more animals. In the embodiment shown there is provided a shelf 15 with a generally horizontal surface 16, an upturned edge 17 and a downwardly turned lip 18 all of which are substantially as described in the above patents of Kleinsasser. Further details of the structure therefore can be obtained by reference to the above patents so that no further detailed description is necessary herein. A water supply into the trough can be provided under control operation or operation by the animal as is known in the above patents.

The shape and arrangement of the hopper and trough can be varied and can provide either a two sided structure as shown or a single sided structure.

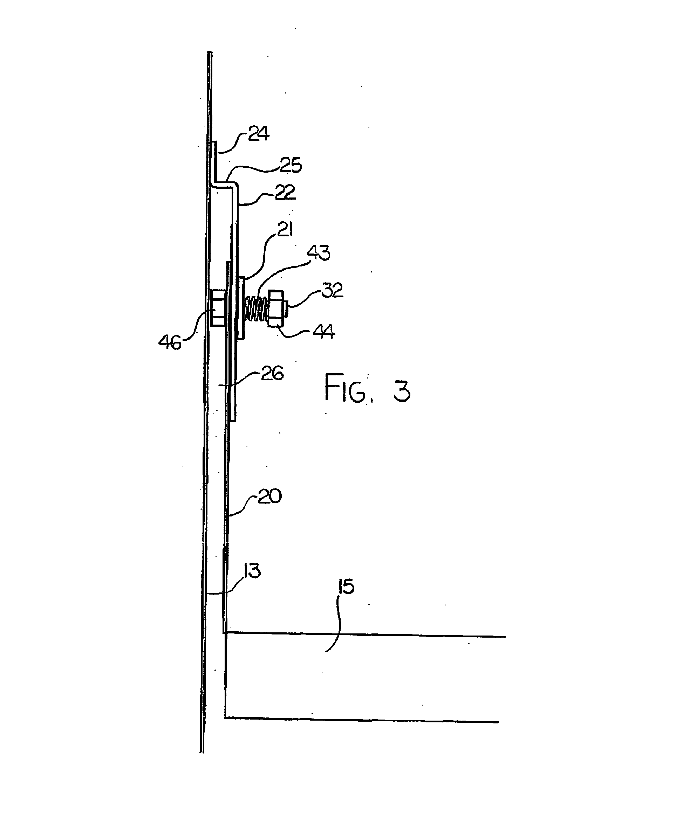

The height of the shelf relative to the end wall of the hopper is adjusted by raising straps 20 where each strap is arranged at a respective end of the shelf and lies along the end wall 13 parallel to the end wall as shown in Figure 3. The strap is raised and lowered by a lever 21 mounted on a support plate 22 by a pivot pin 23. The support plate 22 as best shown in Figure 3 includes an upper mounting flange 24 which is attached to the end wall 13. A bend portion 25 is arranged at right angles to the flange portion 24 and therefore supports the plate 22 at a spaced position from the wall 13 leaving a space 26 at the rear of the plate 22 and inside the end wall 13. The plate 22 is formed from sheet metal which is bent and cut to form the required shape as defined above so that the plate is suspended along the end wall with a bottom edge 27 and at two side edges 28 and 29. The pivot pin 23 is arranged adjacent the side edge 28 and approximately at a mid height of the plate. The lever 21 is also formed of sheet metal which is stamped and punched to form a generally elongate member with an end 30 at the pivot pin 23 and a second end 31 extended beyond the edge 29 of the plate. The lever is formed of flat sheet metal similar to that of the plate so that it lies in contact with the front face of the plate. The lever 21 is attached to the strap 20 by a pin 32 which passes through a hole in the lever and a hole in the strap. A slot 35 is provided in the plate 22 which guides movement of the pin 32 so that the pin is constrained to move vertically and thus move the strap 20 vertically. The length of the slot 35 between an upper end 36 and a lower end 37 provides a length of adjustment equal the allowable movement of the lever 21. A slot 38 in the lever allows the pin to move in the vertical direction while accommodating the arcuate movement of the lever.

The edge 29 of the plate 22 faces away from the pivot axis 23A of the pivot pin 23 and is cut to form a series of saw teeth 39 along the edge 29 from an upper edge 40 to a lower edge 41. Thus the edge of the plate 29 forms an arcuate edge around the axis 23A with the saw teeth punched in the edge of the plate and facing away from the plate as a serrated edge.

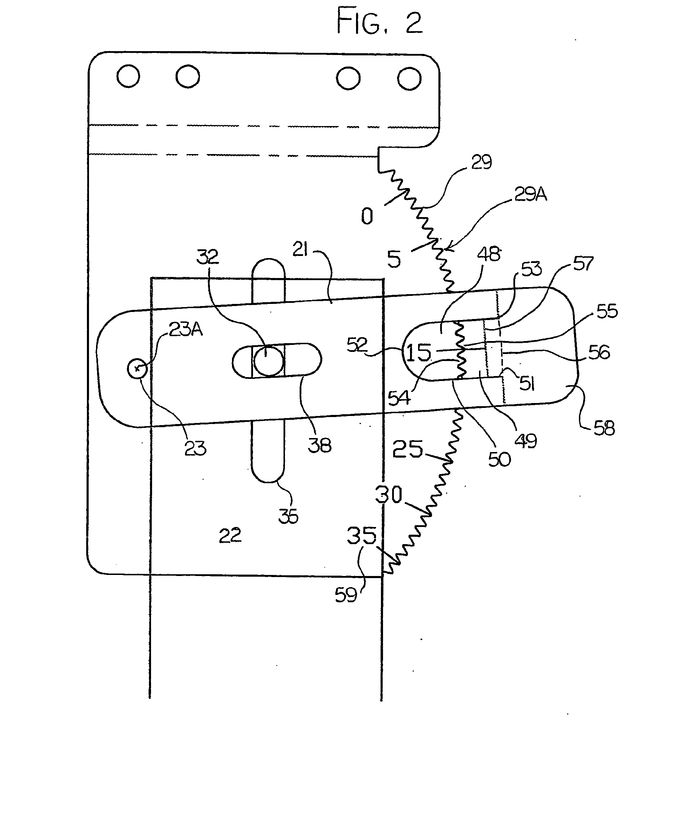

The lever 21 is held flat against the surface of the plate 22 by a spring 43 on the pin 32. The spring is held in place by a nut 44 on the pin 32 so that the spring is compressed between the nut and the outer face 45 of the lever 21. The pin 32 has a head 46 behind the strap 20. The pivot pin 23 provides enough flexibility to allow the lever 21 to be moved away from the plate 22 compressing the spring 43 against the bias of the spring 43. The lever 21 has a hole 48 formed in the lever. The lever further has a recessed portion 49 which is bent downwardly from the plane of the lever into the plane of the plate 22. The hole and the recessed portion are formed by cutting through the plate along a line 50 which extends from an edge 51 along the lever to a semi-circular portion 52 and back along the lever to a second edge 53. This slit or cut in the sheet metal forming the lever allows a serrated edge 54 to be formed having teeth 55 at an edge of the hole 48 and forming an edge of the recessed portion 49. Thus the recessed portion is bent downwardly at a line 56 and is then bent to lie in the common plane with the plate 22 at a line 57. The material beyond the teeth 55 and within the hole 48 is then removed leaving the hole 48 and leaving the exposed teeth 55 at the inwardly facing edge of the recess portion 49. Thus as best shown in Figure 2, the lever is in its normal position flat against the surface of the plate 62 thus causing the saw teeth of the edge of the lever to be in meshing engagement with the saw teeth of the arcuate edge of the plate. The width of the saw teeth is equal on both surfaces so that the teeth are directly meshing. The number of teeth on the edge of the lever is very much less than the number of teeth on the arcuate edge of the plate since the lever is intended to move around the arcuate edge of the plate in an adjustment movement. However the amount of adjustment is equal the pitch of the saw teeth.

The lever 21 includes an end piece 58 which is bent in a direction away from the plate 22 so as to provide a handle or tab which can be readily grasped since it is sufficiently spaced from the end wall of the feeder to be readily accessible by the hand of the user.

Markings 59 are provided on the plate counting the number of saw teeth and numbered from zero at one end through to the total number at the other end of the arcuate edge of the plate. The hole 48 allows viewing of the markings through the hole onto the front surface of the plate so that the user can line up a centre line of the hole with a selected one of the markings.

In operation the meshing saw teeth arrangement of the lever and the plate allow a fine adjustment, bearing in mind that the saw teeth have a relatively fine pitch and bearing in mind that the distance of the pin 32 from the pivot access 23A is significantly less than the distance of the saw teeth from the pivot axis. Thus movement of one pitch of one saw tooth can be arranged to provide a movement of the shelf of a distance of the order of 1/32 to 1/16 inch.

However when required, the shelf can be moved rapidly down to a lowered position simply by grasping the lever and dropping it downwardly to the bottom end of the adjustment thus rapidly increasing the spacing between the bottom of the hopper and the shelf for cleaning or other operations where the distance needs to be rapidly opened. However when rapidly opened, the shelf can be rapidly returned back to its set position simply by the user recalling the number to which it was originally set and by adjusting it rapidly back to the selected number marked on the arcuate edge of the plate 22.

## Claims

1. An animal feeder comprising:
a hopper (11) for containing a feed material to be dispensed to an animal for feeding therefrom;
a receptacle (16) for receiving the feed from the hopper from which the animal can take the feed;
an opening through which the feed passes so that the amount of feed discharged from the hopper to the receptacle is controlled by a width of the opening;
and an adjustment linkage for operating adjustment movement of the opening, the linkage including:
a manually adjustable lever (21) mounted for pivotal movement about a pivot axis (23);
a link (20) attached to the lever (21) and to an element (16) of the opening such that pivotal movement of the lever (21) causes longitudinal movement of the link (20) to effect adjustment of the opening;
a plate (22) defining a surface over which the lever (21) moves, the surface defining an arcuate portion (29) lying on an arc of a circle surrounding the pivot axis (23) of the lever;
**characterized in that** the arcuate portion (29) of the surface is serrated to define an arcuate row of saw teeth (55); the lever has a lever edge which is also serrated with a row of saw teeth (55) shaped to mesh with the saw teeth (39) of the arcuate portion (29) and the lever (21) is movable from a meshing position to a non-meshing position in which the lever (21)is free to move around the pivot axis (23) to move the lever (21) and the teeth (55) thereof along the arcuate row of saw teeth (39) to adjust the position of the link (20).

2. The feeder according to Claim 1 wherein the plate lies in a radial plane of the pivot axis (23) and the arcuate row of teeth (39) are located on an edge (29) of the plate (22).

3. The feeder according to Claim 2 wherein the edge (29) of the plate (22) is an outer edge facing radially outwardly of the axis (23).

4. The feeder according to Claim 2 or 3 wherein the lever (21) is formed by a flat of sheet material which lies in a plane parallel to and slides over the plate (22) and wherein the lever (21) includes a portion (49) thereof which is bent out of a plane of the lever into the plane of the plate (22) and carries the row of saw teeth (55) of the lever on an edge (54) thereof.

5. The feeder according to Claim 4 wherein the lever (21) is movable in a direction axial of the pivot axis (23) to move the row of teeth (55) thereof axially away from the plate (22).

6. The feeder according to Claim 4 wherein the row of teeth (55) on the lever (21) face radially inwardly toward the pivot axis (23).

7. The feeder according to Claim 4 wherein the lever (21) has a hole therein exposing a portion of the plate (22) and markings (59) thereon adjacent the row of saw teeth thereon.

8. The feeder according to any one of Claims 1 to 7 wherein the lever (21) is pivotally mounted on the plate (22).

9. The feeder according to any one of Claims 1 to 8 wherein the link (20) is connected to the lever (21) by a pin (32) which is slidable in a slot (35) in the plate.

10. The feeder according to Claim 9 wherein the pin (32) carries a spring (43) which biases the lever (21) into engagement with the plate (22) into said meshing position and which is compressible to allow movement of the lever (21) to the non-meshing position.

11. The feeder according to any one of Claims 1 to 10 wherein the plate (22) is mounted on an end wall (13) of the hopper (11) parallel to and spaced from the end wall (13).

12. The feeder according to Claim 11 wherein the link (20) comprises a strap located between the plate (22) and the end wall (13).

13. The feeder according to any one of Claims 1 to 12 wherein there is provided a trough (12) into which the feed can fall and wherein the receptacle (16) comprises a shelf mounted above the trough (12) arranged so that the animal can take feed from the shelf (15) or can move the feed from the shelf to the trough.

14. The feeder according to Claim 13 wherein the link (20) is connected to the shelf (15) for adjustment of the height thereof relative to a bottom edge of the hopper (11) defining the opening therebetween.

## Patentansprüche

1. Tierfütterungsvorrichtung, die umfasst:
einen Trichter (11) zum Aufnehmen eines Futtermaterials, das zum Füttern an ein Tier daraus abzugeben ist;
einen Behälter (16) zum Aufnehmen des Futters aus dem Trichter, aus dem das Tier das Futter entnehmen kann;
eine Öffnung, durch die das Futter geht, so dass die Menge des aus dem Trichter in den Behälter entladenen Futters durch eine Breite der Öffnung gesteuert wird;
und ein Einstellgestänge zum Betreiben der Einstellbewegung der Öffnung, wobei das Gestänge enthält:
einen manuell einstellbaren Hebel (21), der zur Schwenkbewegung um eine Drehachse (23) angebracht ist;
ein Verbindungsglied (20), das an dem Hebel (21) und an einem Element (16) der Öffnung in der Weise befestigt ist, dass die Schwenkbewegung des Hebels (21) eine Längsbewegung des Verbindungsglieds (20) veranlasst, um das Einstellen der Öffnung zu bewirken;
eine Platte (22), die eine Oberfläche definiert, über die sich der Hebel (21) bewegt, wobei die Oberfläche einen gebogenen Abschnitt (29) definiert, der auf einem Kreisbogen liegt, der die Drehachse (23) des Hebels umgibt;
**dadurch gekennzeichnet, dass** der gebogene Abschnitt (29) der Oberfläche gezahnt ist, um eine gebogene Reihe von Sägezähnen (55) zu definieren;
wobei der Hebel eine Hebelkante aufweist, die ebenfalls mit einer Reihe von Sägezähnen (55) gezahnt ist, die so geformt sind, dass sie mit den Sägezähnen (39) des gebogenen Abschnitts (29) kämmen, und wobei der Hebel (21) aus einer kämmenden Position in eine nicht kämmende Position, in der sich der Hebel (21) um die Drehachse (23) frei bewegen kann, beweglich ist, um den Hebel (21) und seine Zähne (55) entlang der gebogenen Reihe von Sägezähnen (39) zu bewegen, um die Position des Verbindungsglieds (20) einzustellen.

2. Fütterungsvorrichtung nach Anspruch 1, wobei die Platte in einer radialen Ebene der Drehachse (23) liegt und wobei sich die gebogene Reihe von Zähnen (39) an einem Rand (29) der Platte (22) befindet.

3. Fütterungsvorrichtung nach Anspruch 2, wobei der Rand (29) der Platte (22) ein Außenrand ist, der von der Achse (23) radial nach außen weist.

4. Fütterungsvorrichtung nach Anspruch 2 oder 3, wobei der Hebel (21) durch ein flaches Blechmaterial gebildet ist, das in einer Ebene parallel zu der Platte (22) liegt und über sie gleitet, und wobei der Hebel (21) einen Abschnitt (49) enthält, der aus einer Ebene des Hebels in die Ebene der Platte (22) gebogen ist und der die Reihe von Sägezähnen (55) des Hebels an einer Kante (54) davon trägt.

5. Fütterungsvorrichtung nach Anspruch 4, wobei der Hebel (21) in einer Richtung axial zu der Drehachse (23) beweglich ist, um seine Reihe von Zähnen (55) axial von der Platte (22) wegzubewegen.

6. Fütterungsvorrichtung nach Anspruch 4, wobei die Reihe von Zähnen (55) an dem Hebel (21) in Richtung der Drehachse (23) radial nach innen weist.

7. Fütterungsvorrichtung nach Anspruch 4, wobei der Hebel (21) darin ein Loch aufweist, das darin einen Abschnitt der Platte (22) und an die Reihe von Sägezähnen daran angrenzende Markierungen (59) daran freilegt.

8. Fütterungsvorrichtung nach einem der Ansprüche 1 bis 7, wobei der Hebel (21) an der Platte (22) schwenkbar angebracht ist.

9. Fütterungsvorrichtung nach einem der Ansprüche 1 bis 8, wobei das Verbindungsglied (20) durch einen Stift (32), der in einem Schlitz (35) in der Platte verschiebbar ist, mit dem Hebel (21) verbunden ist.

10. Fütterungsvorrichtung nach Anspruch 9, wobei der Stift (32) eine Feder (43) trägt, die den Hebel (21) in Eingriff mit der Platte (22) in die kämmende Position vorbelastet, und die zusammendrückbar ist, um eine Bewe-gung des Hebels (21) in die nicht kämmende Position zu ermöglichen.

11. Fütterungsvorrichtung nach einem der Ansprüche 1 bis 10, wobei die Platte (22) an einer Stirnwand (13) des Trichters (11) parallel zu der und beabstandet von der Stirnwand (13) angebracht ist.

12. Fütterungsvorrichtung nach Anspruch 11, wobei das Verbindungsglied (20) ein Band umfasst, das sich zwischen der Platte (22) und der Stirnwand (13) befindet.

13. Fütterungsvorrichtung nach einem der Ansprüche 1 bis 12, wobei ein Trog (12) vorgesehen ist, in den das Futter fallen kann, und wobei der Behälter (16) eine über dem Trog (12) angebrachte Ablage umfasst, die so angeordnet ist, dass das Tier von der Ablage (15) Futter entnehmen kann oder das Futter von der Ablage in den Trog bewegen kann.

14. Fütterungsvorrichtung nach Anspruch 13, wobei das Verbindungsglied (20) zur Einstellung seiner Höhe relativ zu einer Unterkante des Trichters (11), die die Öffnung dazwischen definiert, mit der Ablage (15) verbunden ist.

## Revendications

1. Mangeoire pour animaux comprenant :
une trémie (11) pour contenir des aliments à distribuer à un animal pour l'alimenter depuis celle-ci ;
un réceptacle (16) pour recevoir les aliments de la trémie depuis lequel l'animal peut prendre les aliments ;
une ouverture à travers laquelle les aliments passent de façon à ce que la quantité d'aliments déchargée de la trémie vers le réceptacle soit contrôlée par une largeur de l'ouverture ;
et une liaison d'ajustement pour effectuer un mouvement d'ajustement de l'ouverture, la liaison comprenant :
un levier réglable manuellement (21) monté pour le pivotement sur l'axe de pivot (23) ;
un lien (20) fixé au levier (21) et à un élément (16) de l'ouverture de telle façon que le pivotement du levier (21) provoque le mouvement longitudinal du lien (20) pour ajuster l'ouverture ;
un plateau (22) définissant une surface sur laquelle le levier (21) se déplace, la surface définissant une partie arquée (29) reposant sur un arc de cercle entourant l'axe de pivot (23) du levier ;
**caractérisé en ce que** la partie arquée (29) de la surface est crantée de façon à définir une rangée arquée de dents de scie (55) ; le levier a un bord de levier qui est également cranté avec une rangée de dents de scie (55) formée pour s'engrener avec les dents de scie (39) de la partie arquée (29) et le levier (21) est mobile d'une position d'engrènement à une position de non-engrènement dans laquelle le levier (21) est libre de se déplacer sur l'axe de pivot (23) pour déplacer le levier (21) et les dents (55) de celui-ci le long de la rangée arquée de dents de scie (39) pour ajuster la position du lien (20).

2. Mangeoire selon la revendication 1, dans laquelle le plateau repose dans un plan radial de l'axe de pivot (23) et la rangée arquée de dents de scie (39) est située sur un bord (29) du plateau (22).

3. Mangeoire selon la revendication 2, dans laquelle le bord (29) du plateau (22) est un bord extérieur orienté radialement vers l'extérieur de l'axe (23).

4. Mangeoire selon la revendication 2 ou 3, dans laquelle le levier (21) est formé d'un plan de matériau en feuilles qui repose dans un plan parallèle au, et glisse sur le, plateau (22) et dans lequel le levier (21) comprend une partie (49) de celui-ci qui est courbée hors d'un plan du levier dans le plan du plateau (22) et porte la rangée de dents de scies (55) du levier sur un bord (54) de celui-ci.

5. Mangeoire selon la revendication 4, dans laquelle le levier (21) est mobile dans une direction axiale de l'axe de pivot (23) pour déplacer la rangée de dents (55) de celui-ci à distance axiale du plateau (22).

6. Mangeoire selon la revendication 4, dans laquelle la rangée de dents (55) sur le levier (21) est orientée radialement vers l'intérieur en direction de l'axe de pivot (23).

7. Mangeoire selon la revendication 4, dans laquelle le levier (21) présente un trou à l'intérieur exposant une partie du plateau (22) et des repères (59) dessus adjacents à la rangée de dents de scie dessus.

8. Mangeoire selon l'une quelconque des revendications 1 à 7, dans laquelle le levier (21) est monté de façon pivotante sur le plateau (22).

9. Mangeoire selon l'une quelconque des revendications 1 à 8, dans laquelle le lien (20) est connecté au levier (21) par une tige (32) qui peut glisser dans une fente (35) dans le plateau.

10. Mangeoire selon la revendication 9, dans laquelle la tige (32) supporte un ressort (43) qui dévie le levier (21) en engagement avec le plateau (22) dans ladite position d'engrènement et qui est compressible pour permettre le mouvement du levier (21) vers la position de non-engrènement.

11. Mangeoire selon l'une quelconque des revendications 1 à 10, dans laquelle le plateau (22) est monté sur une paroi d'extrémité (13) de la trémie (11) parallèle à, et espacée de, la paroi d'extrémité (13).

12. Mangeoire selon la revendication 11, dans laquelle le lien (20) comprend une courroie située entre le plateau (22) et la paroi d'extrémité (13).

13. Mangeoire selon l'une quelconque des revendications 1 à 12, dans laquelle il est prévu une auge (12) dans laquelle les aliments peuvent tomber et dans lequel le réceptacle (16) comprend un rayonnage monté au-dessus de l'auge (12) agencé de façon à ce que l'animal puisse prendre les aliments du rayonnage (15) ou puisse déplacer les aliments du rayonnage vers l'auge.

14. Mangeoire selon la revendication 13, dans laquelle le lien (20) est relié au rayonnage (15) pour le réglage de la hauteur de celui-ci par rapport à un bord inférieur de la trémie (11) définissant l'ouverture entre eux.
